# EUROPÄISCHE PATENTSCHRIFT

(11) **EP 2 310 643 B1**
(45) Veröffentlichungstag und Bekanntmachung des Hinweises auf die Patenterteilung: **02.11.2011**
(21) Anmeldenummer: 09779960.5
(22) Anmeldetag: 26.06.2009
(51) Int. Cl.: F01N 3/20, F01N 9/00, B01J 35/00

(54) **VERFAHREN ZUM BETRIEB EINER VORRICHTUNG AUFWEISEND ZUMINDEST EINEN ELEKTRISCH BEHEIZBAREN WABENKÖRPER**
METHOD FOR OPERATING A DEVICE HAVING AT LEAST ONE ELECTRICALLY HEATABLE HONEYCOMB BODY
PROCÉDÉ DE FONCTIONNEMENT D'UN DISPOSITIF COMPRENANT AU MOINS UN CORPS EN NID D'ABEILLES POUVANT ÊTRE CHAUFFÉ ÉLECTRIQUEMENT

(30) Priorität: 30.07.2008 DE 102008035561
(43) Veröffentlichungstag der Anmeldung: 20.04.2011
(73) Patentinhaber: Emitec Gesellschaft für Emissionstechnologie mbH, 53797 Lohmar (DE)
(72) Erfinder: HODGSON, Jan, 53840 Troisdorf (DE); BRÜCK, Rolf, 51429 Bergisch Gladbach (DE)
(74) Vertreter: Rössler, Matthias
(86) Internationale Anmeldenummer: PCT/EP2009/058018
(87) Internationale Veröffentlichungsnummer: WO 2010/012550

(56) Entgegenhaltungen:
- DE-A1- 4 434 673
- DE-A1- 19 533 307

## Beschreibung

Die vorliegende Erfindung betrifft ein Verfahren zum Betreiben einer Vorrichtung aufweisend zumindest einen elektrisch beheizbaren Wabenkörper, wie er zur Behandlung von Abgasen eingesetzt wird. Eine solche Vorrichtung z. B. zur katalytischen Umsetzung von Abgasen in einem Abgassystem, insbesondere für ein Abgassystem einer Verbrennungskraftmaschine, vorzugsweise für Otto-Motoren, umfasst ggf. wenigstens einen ersten und einen zweiten in einem gemeinsamen Mantelrohr benachbart angeordneten, nacheinander von einem Abgas durchströmbaren Wabenkörper, wobei mindestens der erste, wenigstens eine Stromverteilungsstruktur aufweisende, elektrisch beheizbare Wabenkörper mit Abstand zum äußeren Mantelrohr in diesem angeordnet ist und die benachbarten Wabenkörper mittels in die Wabenkörper hineinragender Stützelemente miteinander mechanisch verbunden sind.

Der eine Wabenkörper ist dann beispielsweise elektrisch beheizbar, um die katalytische Umsetzung von Abgasen möglichst schnell zu erreichen. Die zwei mit der Mantelfläche des Wabenkörpers verbundenen Stromverteilungsstrukturen, die mit einem elektrischen Stromanschluss verbunden sind, dienen einer gleichmäßigen Stromverteilung. Die Stromverteilungsstrukturen sind mit nach außen ragenden Stiften versehen, die gegenüber dem Mantelrohr elektrisch isoliert sind. Die Stifte dienen als Elektroden zur Stromversorgung des beheizbaren Katalysators.

Ein elektrisch beheizbarer Wabenkörper wird z. B. in der DE 44 34 673 A1 beschrieben. Gegenstand dieser Veröffentlichung ist, einen beheizbaren Katalysator mit einer geeigneten elektrischen Isolierung und mechanischen Fixierung anzugeben, der zugleich einfach und kostengünstig herstellbar ist.

Während der elektrisch beheizbare Wabenkörper gegenüber dem gemeinsamen Mantelrohr elektrisch isoliert ist, ist der zweite Wabenkörper mit dem gemeinsamen Mantelrohr, das ggf. an Masse anliegt, verbunden, so dass über die in die Wabenkörper hineinragenden Stützelemente ein Strom fließen kann, wenn die elektrische Isolierung zwischen den Stützelementen und dem elektrisch beheizbaren Wabenkörper beeinträchtigt ist. Diese elektrische Isolierung kann z.B. durch Rußablagerungen zwischen dem elektrisch beheizbaren, Wabenkörper und den Stützelementen hervorgerufen werden, was zur Folge hat, dass sich über die Rußablagerungen ein elektrischer Kurzschluss mit anschließender Bildung eines Lichtbogens ausbilden kann, der zur Zerstörung der Stützelemente führt.

Dementsprechend liegt der Erfindung die Aufgabe zugrunde, die mit Bezug auf den Stand der Technik geschilderten Probleme zumindest teilweise zu lösen. Insbesondere soll bei eingangs erwähnten Vorrichtungen ein wirksamer Schutz gegen die Beschädigung und/oder das Zerstören der Stützelemente angegeben werden.

Diese Aufgaben werden gelöst durch das Verfahren gemäß den Merkmalen des Patentanspruchs 1 und einer Vorrichtung gemäß den Merkmalen des Patentanspruchs 4. Vorteilhafte Weiterbildungen sind jeweils Gegenstand der abhängigen Patentansprüche. Die dort angegebenen Merkmale können beliebig miteinander kombiniert werden. Die Beschreibung, insbesondere im Zusammenhang mit den Figuren, gibt weitere Ausführungsbeispiele an.

Das erfindungsgemäße Verfahren betrifft den Betrieb einer Vorrichtung aufweisend zumindest einen elektrisch beheizbaren und für ein Abgas durchströmbaren ersten Wabenkörper, wobei der erste, elektrisch beheizbare Wabenkörper wenigstens eine Stromverteilungsstruktur hat. Diese wird nun bei einem Einschalten zunächst mit mehreren, kurzen, aufeinanderfolgenden Spannungsimpulsen beaufschlagt wird, bevor die Stromverteilungsstruktur zum Aufheizen des Wabenkörpers mit einer konstanten Heizspannung beaufschlagt wird.

Folglich können festgelegte und/oder berechnete Zeitpunkte zur Aktivierung der Vorrichtung bestimmt werden und dann mit dem Verfahren ein Beheizen des Wabenkörpers (und damit des ihn durchströmenden Abgases) durchgeführt werden. Bevorzugt ist, dass drei bis zehn Spannungsimpulse erzeugt werden bevor die Heizspannung angelegt wird. Ganz besonders bevorzugt sind 3 bis 5 Spannungsimpulse. Die Heizspannung wird bevorzugt über mehrere Sekunden oder sogar Minuten aufrecht erhalten, so dass die Spannungsimpulse,weniger als 3 %, insbesondere weniger als 0,1 % der Heizperiode ausmachen.

Weiter wird als vorteilhaft angesehen, dass die Spannungsimpulse eine Zeitdauer von 10 bis 100 Millisekunden aufweisen. Bevorzugt ist insbesondere, dass jeder Spannungsimpuls eine Zeitdauer von etwa 50 Millisekunden nicht überschreitet.

Außerdem kann vorteilhaft sein, dass die Spannungshöhe der Spannungsimpulse niedriger als die Spannungshöhe der konstanten Heizspannung ist. Die Spannungshöhe der Heizspannung beträgt z.B. mehr als 12 Volt, wie z.B. ca. 18 Volt.

Demnach wird hier insbesondere ein Verfahren zum Betreiben einer Vorrichtung zur katalytischen Umsetzung von Abgasen in einem Abgassystem, insbesondere für ein Abgassystem einer Verbrennungskraftmaschine, vorzugsweise für Otto-Motoren angegeben, die wenigstens einen ersten und einen zweiten, in einem gemeinsamen Mantelrohr benachbart angeordnete, nacheinander von einem Abgas durchströmbare Wabenkörper umfasst. Dabei ist mindestens der erste, wenigstens eine Stromverteilungsstruktur aufweisende, elektrisch beheizbare Wabenkörper mit Abstand zum äußeren Mantelrohr in diesem angeordnet. Der benachbarte Wabenkörper ist mittels in die Wabenkörper hineinragender, im elektrisch beheizbaren Wabenkörper elektrisch isoliert angeordneter und mit dem benachbarten Wabenkörper elektrisch leitend verbundener Stützelemente mechanisch verbunden. Die Stromverteilungsstruktur wird nun beim Einschalten zunächst mit mehreren, kurzen, aufeinanderfolgenden Spannungsimpulsen zum Verbrennen an den Stützelementen abgelagerten Rußes beaufschlagt, bevor die Stromverteilungsstruktur zum Aufheizen des Wabenkörpers mit einer (z. B.) konstanten Dauerspannung beaufschlagt wird.

Mit dem Steuergerät ist ein elektrisches Gerät gemeint, das die Stromzufuhr zum elektrisch beheizbaren Wabenkörper in der Weise steuert, dass beim Einschalten zunächst mehrere, kurze, aufeinanderfolgende Spannungsimpulse erzeugt werden, bevor die Stromverteilungsstruktur mit einer konstanten Dauerspannung beaufschlagt wird. Dieses Steuergerät kann mit der Motorsteuerung in der Weise verbunden sein, dass beim Start des Motors das Steuergerät ein Signal erhält, zunächst die Spannungsimpulse zu erzeugen, um dann auf eine konstante Dauerspannung umzuschalten.

Die erfindungsgemäße Vorrichtung zur katalytischen Umsetzung von Abgasen in einem Abgassystem zeichnet sich dadurch aus, dass die Stützkörper im elektrisch beheizbaren Wabenkörper in Hülsen unter Zwischenschaltung einer elektrischen Isolierung angeordnet und mit dem benachbarten Wabenkörper elektrisch leitend verbunden sind und ein Steuergerät für die Stromverteilungsstruktur dafür eingerichtet ist, beim Einschalten zunächst mehrere, kurze aufeinanderfolgende Spannungsimpulse zu erzeugen, bevor die Stromverteilungsstruktur mit einer konstanten Dauerspannung beaufschlag wird.

Durch die Spannungsimpulse entstehen zwischen dem elektrisch beheizbaren Wabenkörper und den Stützelementen kurzzeitig Lichtbögen, wenn sich zwischen diesen elektrisch beheizbaren Wabenkörpern und den Stützelementen Rußablagerungen gebildet haben. Durch diese kurzen Lichtbögen werden die Rußablagerungen verbrannt, so dass die Isolierung wieder wirksam wird und durch die Beaufschlagung mit der konstanten Dauerspannung ein länger brennender Lichtbogen, der die Stützelemente zerstören würde, nicht mehr entstehen kann.

Das Steuergerät ist dafür eingerichtet, 3 bis 10 Spannungsimpulse zu erzeugen, die eine Zeitdauer von 10 bis 100 ms, vorzugsweise 50 ms, aufweisen können.

Außerdem ist vorteilhaft, wenn die Vorrichtung mit einer 18-Volt-Versorgung zusammenwirkt.

Verfahren und Vorrichtung werde insbesondere in Kombination miteinander vorgeschlagen, insbesondere integriert in ein Kraftfahrzeug.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, auf diese jedoch nicht beschränkt ist. In der Zeichnung zeigen schematisch:
- Fig. 1:: im Längsschnitt eine Vorrichtung zur katalytischen Abgasumsetzung,
- Fig. 2:: eine vergrößerte Schnittdarstellung eines im elektrisch beheizbaren Wabenkörper angeordneten Stützelementes, und
- Fig. 3:: eine grafische Darstellung der durch das Steuergerät erzeugten Spannungsimpulse und der konstanten Heizspannung.

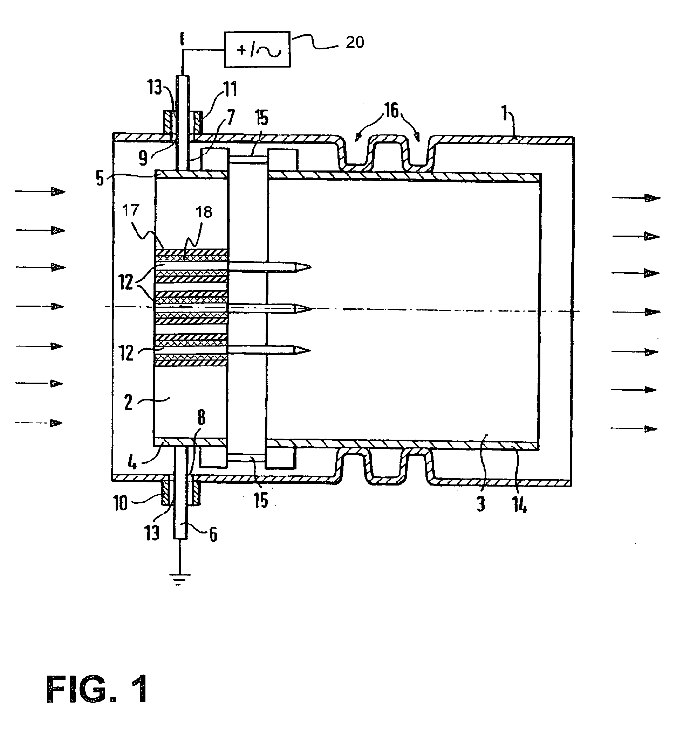

Fig. 1 zeigt ein bevorzugtes Ausführungsbeispiel einer Vorrichtung zur katalytischen Umsetzung von Abgasen in einem Abgassystem. Die Vorrichtung umfasst zwei in einem gemeinsamen Mantelrohr 1 angeordnete, nacheinander von einem Abgas (siehe Pfeile) durchströmbare Wabenkörper 2, 3. Der erste Wabenkörper 2 ist mit Abstand zum gemeinsamen Mantelrohr 1 in diesem angeordnet und elektrisch beheizbar. Die äußere Mantelfläche des ersten Wabenkörpers 2 wird durch zwei schalenförmige Stromverteilungsstrukturen 4, 5 gebildet. Die Stromverteilungsstrukturen 4, 5 sind jeweils mit einem elektrischen Stromanschluss 6 bzw. einem Masseanschluss 7 verbunden. Die Elektroden für den elektrischen Stromanschluss 6 bzw. den Masseanschluss 7 ragen durch im gemeinsamen Mantelrohr 1 ausgebildete Öffnungen 8, 9 nach außen. Die Elektroden durchdringen Verbindungsstücke 10, 11, die mit dem gemeinsamen Mantelrohr 1 verschweißt sind. Die Verbindungsstücke 10, 11 weisen eine Isolierschicht 13 auf, so dass die Elektroden gegenüber dem gemeinsamen Mantelrohr 1 elektrisch isoliert sind.

Die zwei Wabenkörper 2, 3 sind mittels in die Wabenkörper hineinragender Stützelemente 12 miteinander verbunden, dass heißt insbesondere, dass der erste, elektrisch beheizbare Wabenkörper 2 gegen die Stirnfläche den zweiten Wabenkörper 3 abgestützt angeordnet ist. Zur besseren Übersichtlichkeit sind beispielhaft nur drei von einer Vielzahl von möglichen Stützelementen 12 dargestellt.

Der Wabenkörper 3 weist ein inneres Mantelrohr 14 auf. Die Stromverteilungsstrukturen 4, 5 ist mit dem inneren Mantelrohr 14 des Wabenkörpers 3 durch zusätzliche Halteelemente 15 verbunden.

In dem gemeinsamen Mantelrohr 1 sind zwei umlaufende Innensicken 16 ausgebildet. Die Innensicken 16 sind so ausgebildet, dass sie zur Anlage an das innere Mantelrohr 14 des Wabenkörpers 3 gelangen. An den sich berührenden Flächen zwischen den Sicken 16 und dem inneren Mantelrohr 14 kann eine stoffliche Verbindung bestehen.

Die (metallischen) Stützelemente 12 sind im elektrisch beheizbaren Wabenkörper 2 mittels (z.B. metallischer) Hülsen 17 gelagert, wobei in einem Zwischenraum zwischen den Stützelementen 12 und den Hülsen 17 eine elektrische Isolierung 18 (z.B. nach Art einer keramischen Beschichtung) angeordnet ist.

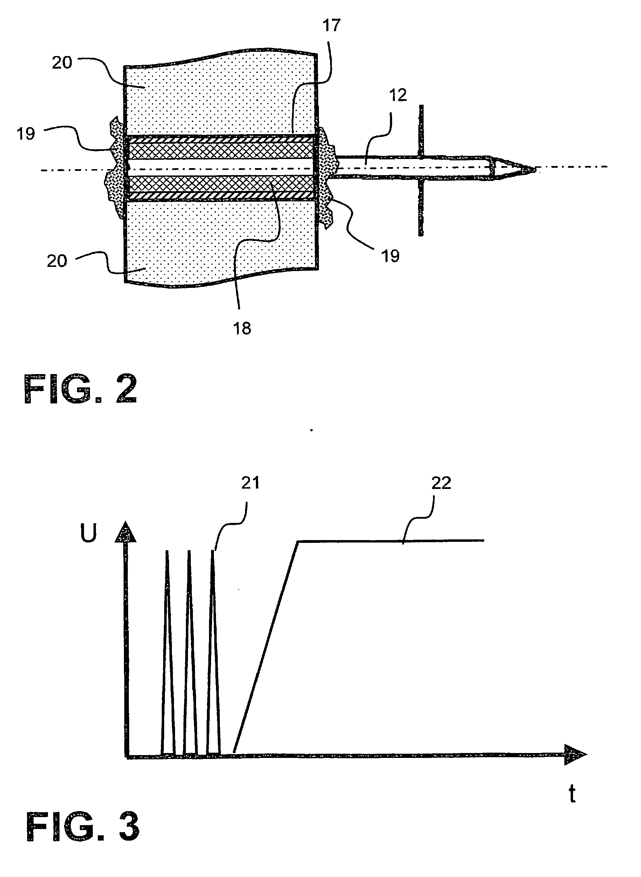

In Fig. 2 ist die Anordnung eines Stützelementes 12 im elektrisch beheizbaren Wabenkörper 2 vergrößert dargestellt und die Hülsen 17 sowie die Isolierung 18 sind erkennbar.

Wenn im Abgas Rußpartikel enthalten sind, können sich Rußablagerungen 19 zu beiden Seiten des elektrisch beheizbaren Wabenkörpers 2 bilden, die, weil Ruß bekanntlich elektrisch leitend ist, eine elektrisch leitende Brücke zwischen dem elektrisch beheizbaren Wabenkörper, den darin angeordneten (metallischen) Hülsen 17 und/oder den (metallischen) Stützelementen 12 bilden. Wird nun gemäß dem Stand der Technik an den elektrisch leitenden Wabenkörper 2 über die Stromverteilungsstruktur 4, 5 eine konstante Dauerspannung angelegt, bildet sich zunächst ein Kurzschluss über die Rußablagerung 19 und anschließend, wenn die Rußablagerung 19 verbrannt ist, ein dauerhafter Lichtbogen aus, der zur Beschädigung oder sogar zur Zerstörung der Stützelemente 12 führt.

Um dieses zu vermeiden, ist ein Steuergerät 20 vorgesehen, dass dafür eingerichtet ist, beim Einschalten zunächst mehrere, kurze, aufeinanderfolgende Spannungsimpulse zu erzeugen, bevor die Stromverteilungsstrukturen 4, 5 mit einer konstanten Heizspannung beaufschlagt werden.

In Fig. 3 ist ersichtlich, dass zunächst drei kurze Spannungsimpulse 21 durch das Steuergerät 20 erzeugt werden, die zur Verbrennung der Rußablagerung 19 ohne Beschädigung der Stützelemente 12 führen, wonach die konstante Heizspannung durch das Steuergerät 20 angelegt werden kann, ohne dass ein die Stützelemente 12 beschädigender Lichtbogen auftreten kann. Gemäß Fig. 3 erzeugt das Steuergerät 20 zunächst drei Spannungsimpulse 21 und danach die konstante Dauerspannung, jedoch lassen sich bei Bedarf auch mehr Spannungsimpulse erzeugen, wobei festgestellt wurde, dass maximal 10 Spannungsimpulse in der Regel ausreichen, um etwaige RuLiablagerungen 19 zu verbrennen.

Die Zeitdauer der Spannungsimpulse kann zwischen 10 und 100 Millisekunden, vorzugsweise bei 50 Millisekunden, liegen.

Die Spannungshöhe der Spannungsimpulse 21 ist gemäß Fig. 3 dieselbe wie die der konstanten Heizspannung 22, jedoch können diese auch unterschiedlich sein, bspw. kann die Spannungshöhe der Spannungsimpulse niedriger sein als die Spannungshöhe der konstanten Heizspannung, um ein sicheres Verbrennen der Rußablagerung 19 zu erreichen, ohne dass gefährliche Lichtbogen entstehen.

Die vorliegende Erfindung ist nicht auf das dargestellte Ausfiihrungsbeispiel beschränkt. Es sind vielmehr zahlreiche Abwandlungen der Erfindung im Rahmen der Patentansprüche möglich.

### Bezugszeichenliste

- 1: gemeinsames Mantelrohr
- 2: erster, elektrisch beheizbarer Wabenkörper
- 3: zweiter Wabenkörper
- 4: erste Stromverteilungsstruktur
- 5: zweite Stromverteilungsstruktur
- 6: Stromanschluss
- 7: Masseanschluss
- 8: erste Öffnung
- 9: zweite Öffnung
- 10: erstes Anschlussstück
- 11: zweites Anschlussstück
- 12: Stützelement
- 13: Isolierschicht
- 14: inneres Mantelrohr
- 15: Halteelement
- 16: Sicke
- 17: Hülse
- 18: Isolierung
- 19: Rußablagerung
- 20: Steuergerät
- 21: Spannungsimpuls
- 22: Heizspannung

## Patentansprüche

1. Verfahren zum Betreiben einer Vorrichtung aufweisend zumindest einen elektrisch beheizbaren und für ein Abgas durchströmbaren ersten Wabenkörper (2), wobei der erste, elektrisch beheizbare Wabenkörper (2) wenigstens eine Stromverteilungsstruktur (4) hat, welche bei einem Einschalten zunächst mit mehreren, kurzen, aufeinanderfolgenden Spannungsimpulsen (21) beaufschlagt wird, bevor die Stromverteilungsstruktur (4) zum Aufheizen des Wabenkörpers (2) mit einer konstanten Heizspannung (22) beaufschlagt wird.

2. Verfahren nach Patentanspruch 1, bei dem drei bis zehn Spannungsimpulse (21) erzeugt werden, bevor die Heizspannung (22) angelegt wird.

3. Verfahren nach Patentanspruch 1 oder 2, bei dem die Spannungsimpulse (21) eine Zeitdauer von 10 bis 100 Millisekunden aufweisen.

4. Verfahren nach einem der vorhergehenden Patentansprüche, bei dem die Spannungshöhe der Spannungsimpulse (21) niedriger als die Spannungshöhe der konstanten Heizspannung (22) ist.

5. Vorrichtung zur katalytischen Umsetzung von Abgasen in einem Abgassystem, die wenigstens einen ersten und einen zweiten in einem gemeinsamen Mantelrohr (1) benachbart angeordnete, nacheinander von einem Abgas durchströmbare Wabenkörper (2, 3) umfasst, wobei mindestens der erste, mindestens eine Stromverteilungsstruktur (4, 5) aufweisende, elektrisch beheizbare Wabenkörper (2) mit Abstand zum äußeren Mantelrohr (1) in diesem angeordnet ist und die benachbarten Wabenkörper (2, 3) mittels in die Wabenkörper (2, 3) hineinragender Stützelemente (12) miteinander mechanisch verbunden sind, wobei die Stützelemente (12) im elektrisch beheizbaren Wabenkörper (2) in Hülsen (17) unter Zwischenschaltung einer elektrischen Isolierung (18) angeordnet und mit dem benachbarten Wabenkörper (3) elektrisch leitend verbunden sind und ein Steuergerät (20) für die Stromverteilungsstrukturen (4, 5) dafür eingerichtet ist, beim Einschalten zunächst mehrere kurze, aufeinanderfolgende Spannungsimpulse zu erzeugen, bevor die Stromverteilungsstruktur (4, 5) mit einer konstanten Dauerspannung beaufschlagt wird.

6. Vorrichtung nach Patentanspruch 5, bei dem das Steuergerät (20) dafür eingerichtet ist, drei bis zehn Spannungsimpulse (21) zu erzeugen.

7. Vorrichtung nach Patentanspruch 5 oder 6, bei dem eine 18-Volt-Versorgung der Vorrichtung vorgesehen ist.

## Claims

1. Method for operating a device having at least one electrically heatable first honeycomb body (2) which can be traversed by exhaust gas, wherein the first electrically heatable honeycomb body (2) has at least one current distributing structure (4) which, upon an activation, is acted on initially with a plurality of short successive voltage pulses (21), before the current distributing structure (4) is acted on with a constant heating voltage (22) to heat the honeycomb body (2).

2. Method according to claim 1, in which three to ten voltage pulses (21) are generated before the heating voltage (22) is applied.

3. Method according to claim 1 or 2, in which the voltage pulses (21) have a duration of 10 to 100 milliseconds.

4. Method according to one of the preceding claims, in which the voltage level of the voltage pulses (21) is lower than the voltage level of the constant heating voltage (22).

5. Device for the catalytic conversion of exhaust gases in an exhaust system, which device comprises at least one first and one second honeycomb body (2, 3) which are arranged adjacently in a common casing tube (1) and which can be traversed in series by an exhaust gas, wherein at least the first electrically heatable honeycomb body (2) which has at least one current distributing structure (4, 5) is arranged in the outer casing tube (1) with a spacing to the latter, and wherein the adjacent honeycomb bodies (2, 3) are mechanically connected to one another by means of support elements (12) which project into the honeycomb bodies (2, 3), wherein the support elements (12) are arranged in the electrically heatable honeycomb body (2) in sleeves (17) with the interposition of an electric insulation (18) and being connected in electrically conductive fashion to the adjacent honeycomb body (3), and wherein a control unit (20) for the current distributing structures (4, 5) is constructed to initially generate a plurality of short successive voltage pulses upon activation, before the current distributing structure (4, 5) is acted on with a constant continuous voltage.

6. Device according to claim 5, in which the control unit (20) is set up to generate three to ten voltage pulses (21).

7. Device according to claim 5 or 6, in which an 18 volt supply of the device is provided.

## Revendications

1. Procédé destiné à l'opération d'un dispositif comprenant au moins un premier corps en nids d'abeilles (2) pouvant être chauffé électriquement et pouvant être parcouru par un gaz d'échappement, le premier corps en nids d'abeilles pouvant être chauffé électriquement (2) ayant au moins une structure de répartition du courant (4), qui lors d'une mise en marche est d'abord chargée d'une pluralité d'impulsions de tension (21) courtes, successives, avant que la structure de répartition du courant (4) soit chargée d'une tension de chauffage constante (22) pour chauffer le corps en nids d'abeilles (2).

2. Procédé selon la revendication 1, dans le cas duquel trois à dix impulsions de tension (21) sont générées, avant que la tension de chauffage (22) soit appliquée.

3. Procédé selon la revendication 1 ou 2, dans le cas duquel les impulsions de tension (21) ont une durée de 10 à 100 millisecondes.

4. Procédé selon l'une des revendications précédentes, dans le cas duquel le voltage des impulsions de tension (21) est plus bas que le voltage de la tension de chauffage constante (22).

5. Dispositif destiné à la transformation catalytique de gaz d'échappement dans un système de gaz d'échappement, qui comprend au moins un premier et un deuxième corps en nids d'abeilles (2, 3), agencés de manière adjacente dans un tube d'enveloppe (1) commun et pouvant être traversés successivement par un gaz d'échappement, dans quel cas au moins le premier corps en nids d'abeilles, ayant au moins une structure de répartition du courant (4, 5) et pouvant être chauffé électriquement (2) étant agencé à distance du tube d'enveloppe extérieur (1) dans celui-ci et les corps en nids d'abeilles adjacents (2, 3) sont reliés mécaniquement les uns aux autres au moyen d'éléments d'appui (12) s'étendant dans les corps en nids d'abeilles (2, 3), les éléments d'appui (12) étant agencés dans des douilles (17) dans le corps en nids d'abeilles pouvant être chauffé électriquement (2) tout en intercalant une isolation électrique (18) et étant relié de manière électroconductrice avec le corps en nids d'abeilles adjacent (3) et en ce qu'un appareil de commande (20) est installé pour les structures de répartition de courant (4, 5) pour générer lors de la mise en circuit d'abord une pluralité d'impulsions de tension successives courtes, avant que la structure de répartition de courant (4, 5) soit chargée d'une tension continue constante.

6. Dispositif selon la revendication 5, dans le cas duquel l'appareil de commande (20) est installé pour générer trois à 10 impulsions de tension (21).

7. Dispositif selon les revendications 5 ou 6, dans le cas duquel une alimentation de 18 Volt est prévue pour le dispositif.
